# EUROPÄISCHE PATENTSCHRIFT

(11) **EP 1 611 067 B1**
(45) Veröffentlichungstag und Bekanntmachung des Hinweises auf die Patenterteilung: **21.05.2008**
(21) Anmeldenummer: 04722559.4
(22) Anmeldetag: 23.03.2004
(51) Int. Cl.: C03C 17/30

(54) **GLASARTIGE BEDRUCKUNG MITTELS SIEBDRUCK**
VITREOUS PRINTING BY MEANS OF A SILKSCREEN PROCESS
IMPRESSION DE TYPE VITREUX PAR SERIGRAPHIE

(30) Priorität: 26.03.2003 DE 10313630
(43) Veröffentlichungstag der Anmeldung: 04.01.2006
(73) Patentinhaber: BSH Bosch und Siemens Hausgeräte GmbH, 81739 München (DE); Inomat GmbH, 66440 Blieskastel (DE)
(72) Erfinder: JÖRDENS, Frank, 83278 Traunstein (DE); SCHMIDMAYER, Gerhard, 83093 Bad Endorf (DE); VON LÖSCHNER, Detlev, 83349 Palling (DE); KALLEDER, Axel, 66440 Blieskastel (DE)
(86) Internationale Anmeldenummer: PCT/EP2004/003079
(87) Internationale Veröffentlichungsnummer: WO 2004/085555

(56) Entgegenhaltungen:
- EP-A- 0 672 736
- DE-A- 19 828 759
- DE-A- 19 946 712
- US-A- 5 962 568

## Beschreibung

Die vorliegende Erfindung betrifft eine Siebdruckpaste, mit der die Bedruckung auch von Glas, das in Koch-, Brat-, Back- und Grillgeräten verwendet und im Betrieb erhöhten Temperaturen ausgesetzt wird, erfolgen kann. Dies ist insbesondere vorgespanntes (kann aber genauso auch nicht vorgespanntes sein) Borofloat-Glas auf Borosilikat-Basis. Die vorliegende Erfindung betrifft weiterhin ein Verfahren zur Herstellung dieser Paste. Schließlich betrifft die Erfindung die Verwendung dieser Paste für die Herstellung von ggf. blickdichten Siebdruck-Dekors auf Glas.

In Haushaltsgeräten, insbesondere in Haushaltsgaröfen mit dem Leistungsmerkmal "pyrolytische Selbstreinigung", können an der Muffelwandung eingebrannte Garrückstände pyrolysiert werden. Die Garraumtür eines solchen Haushaltsgarofens ist üblicherweise mehrwandig verglast. Bei der Pyrolyse treten im Innenraum des Ofens typischerweise Temperaturen bis zu 500°C auf, und selbst die dem Türinnenraum zugewandte Oberfläche des inneren Türglases wird dabei Temperaturen von bis zu 400°C und ggf. sogar bis 420°C ausgesetzt. Diese gegenüber normalen Betriebstemperaturen eines Haushaltsgarofens wesentlich höheren Temperaturen erfordern für die Verglasung der Garraumtür (aus thermomechanischen Gründen) den Einsatz hochwertiger Gläser. Es hat sich hierfür der Einsatz von Borosilikat-Gläsern durchgesetzt. Das üblicherweise für solche außerordentlich stark temperaturbelasteten Glasscheiben (Fenster) verwendete Glas ist also ein Borofloat-Glas auf der Basis von Borosilikat. Dieses Glas wird durch Erhitzen auf 650 - 800°C und gezieltes Abkühlen thermisch vorgespannt, um so die mechanische Festigkeit des Glases zusätzlich zu erhöhen, das heißt, um das Glas gegen Schlag und Stoßbelastungen im Gebrauch widerstandsfähiger zu machen.

Aus Gründen des Designs, aber auch, um verschiedene Funktionalitäten des Haushaltsgerätes zu erreichen, werden mittels Siebdruck- oder Tampondruck-Verfahren Druckpasten auf Borosilikat-Glas aufgebracht und thermisch verfestigt bzw. eingebrannt. Entsprechendes gilt auch für anderes Glas (z.B. Natron-Kalk-Glas bzw. Natrium-/Kaliumsilikat-Glas), das jedoch, was die mechanische Festigkeit und Temperaturbelastung angeht, eine im Vergleich zu Borosilikat-Glas geringere Qualität aufweist.

Druckpasten auf organischer Basis sind auf Grund ihrer Polymer-Matrix nur bis etwa 300°C beständig. Bei höheren Temperaturen beginnt ein oxidativer Abbau der Bindemittel, der zur optischen und auch mechanischen Zerstörung der Bedruckung führt. Auf Grund der oben bereits genannten thermischen Beanspruchung von Glasfenstern in Herden (Temperaturen von 400 - 420°C), scheiden herkömmliche organische Druckpasten zur blickdichten Abdeckung von durchsichtigen Scheiben in/an Haushaltsgeräten aus.

Im Gegensatz dazu würden klassische Emaildekors auf anorganischer Basis zwar eine ausreichende thermische Beständigkeit aufweisen, sie erfordern zum Einbrand allerdings Temperaturen von teilweise mehr als 500°C, um den Glasfluß der Fritte zu ermöglichen. Bei diesen Temperaturen können aber erhebliche Vorspannungsverluste des Glases auftreten. Gleichzeitig werden durch die aggressive Glasfritte Mikrorisse, die sich herstellungsbedingt in der Glasoberfläche befinden, vergrößert. Beides führt einerseits zu einem dramatischen Festigkeitsverlust des vorgespannten Borofloat-Glases und erhöht andererseits die Gefahr, dass das Glas bei den in Pyrolyse-Öfen üblicherweise herrschenden Temperaturen oder bei Stoßeinwirkungen zerbricht. Darüber hinaus weisen solche klassischen Emaildekors eine unzureichende Haftung an der Oberfläche des Borofloat-Glases auf.

Die Einbrand-Temperaturen klassischer Emaildekors lassen sich gemäß dem Stand der Technik durch Zusatz von Schwermetallen geringfügig, allerdings nicht auf Temperaturen unterhalb 500°C senken. Somit enthalten auch Emails für Einbrände zwischen 500 und 600°C üblicherweise PbO, Bi₂O₃ o.ä. Die Verwendung von Schwermetallen kann im Bereich von Haushalts- und speziell Küchengeräten wie Herden für den Anwender jedoch keinesfalls erwünscht sein. Entsprechendes gilt für organische Verbindungen, die sich bei den Betriebstemperaturen entweder verflüchtigen oder zersetzen.

Die DE-A 42 17 432 beschreibt ein Verfahren zur Herstellung von Glas mit verbesserter Langzeitbeständigkeit bei erhöhten Temperaturen. Bei diesem Verfahren wird eine Zusammensetzung, die das Produkt einer Hydrolyse und Kondensation mindestens einer Si-Verbindung in flüssiger Phase bzw. eines entsprechenden Vorkondensats ist, mittels Tauchen, Ziehen oder Sprühen auf das Glas aufgebracht. Durch anschließende Wärmebehandlung wird ein nicht vollständig verdichteter Überzug einer Dicke von nur 0,8 bis 8 µm gebildet. Der Überzug ist jedoch transparent, da er er keine mikroskaligen Füllstoffe, wie z.B. Pigmente, enthält. Die Zusammensetzung, die mittels Tauchen, Ziehen oder Sprühen auf das Glas aufgebracht wird, enthält (vor dem Verdichtungsprozess) große Mengen von Alkoholen, die im Laufe des Kondensationsvorgangs gebildet und nicht entfernt werden. Die erhaltenen Beschichtungen erfordern hohe Verdichtungstemperaturen, die insbesondere für vorgespanntes Glas nicht in Betracht kommen

Ein vergleichbarer, glasartiger Überzug wird in der DE-A 43 38 360 beschrieben, nach der dieser hergestellt wird, indem eine Zusammensetzung, die erhältlich ist durch Hydrolyse und Polykondensation von mindestens einem hydrolysierbaren Silan SiX₄ (oder einem davon abgeleiteten Oligomer) und mindestens einem Organosilan mit wenigstens einem hydrolysierbaren und ggf. einem nicht hydrolysierbaren Rest (oder einem davon abgeleiteten Oligomer), mit mindestens einem Funktionsträger wie temperaturbeständiger/s Farbstoff/Pigment, Metall-/Nichtmetalloxid, färbendes Metallion, Metall- oder Metallverbindungs-Kolloid und Metallionen, die unter Reduktionsbedingungen zu Metall-Kolloiden reagieren, vermischt, die mit dem Funktionsträger vermischte Zusammensetzung auf ein Substrat aufgebracht und der erhaltene Überzug thermisch verdichtet wird. Auch dieser Überzug wird durch Tauchen oder Ziehen aufgebracht und bleibt transparent. Die beschriebenen Schichtdicken liegen bei wenigen µm (1 - 3,5 µm). Das verwendete Grundsol wurde in Ethanol als Lösungsmittel hergestellt. Im Laufe der Polykondensation wurde weiteres Ethanol gebildet, ehe unter Bildung einer lagerfähigen Beschichtungslösung nochmals Ethanol zugesetzt wurde.

Dickere, aber dennoch transparente Beschichtungen beschreibt die DE-A 100 18 697. Nanopartikel werden zunächst organisch gebunden, ehe das organische Bindemittel thermisch zersetzt wird. Es entsteht ein loser Verbund von Nanopartikeln, die anschließend bei Temperaturen im Bereich 450 - 1200°C versintert werden, um zu mechanisch stabilen Schichten zu gelangen. Die erhaltenen Beschichtungen finden Verwendung in der Optik, Optoelektronik oder Elektronik. Farbkörper werden gemäß der Aufgabe, eine *transparente* Beschichtung zu erzeugen, nicht oder nur in Spuren (als Dotierungsmittel) verwendet.

Eine andere Beschichtung auf Basis von Silanen mit hydrolysierbaren Resten ähnlich der in der DE-A 43 38 360 beschriebenen Beschichtung, die auch mittels Siebdruck aufzutragen ist, wird in der DE-A 198 16 136 beschrieben. Das durch Kondensation erhaltene Sol ist ein wäßriges, ein alkoholisches oder ein wäßrig/alkoholisches Sol. Nach der Kondensation, bei der Alkohole gebildet werden, werden diese größtenteils entfernt und durch Wasser ersetzt, um so die geeignete Viskosität der resultierenden Zusammensetzung einzustellen. Diese Möglichkeit der Viskositätseinstellung setzt voraus, dass sich das System nach Entfernung des infolge Hydrolyse und Kondensation frei werdenden Alkohols noch in einem flüssigen Aggregatzustand befindet. Dies ist generell nur dann möglich, wenn die Kondensation bei relativ niedrigen Kondensationsgraden (< 50 %) gestoppt wird. Dies kann im Fall der vorliegenden Beschichtung aber nur gelingen, wenn das verwendete Silan mindestens einen vernetzbaren organischen Rest enthält. Dieser Rest blockiert die Kondensation nachhaltig in zweierlei Sinne. Zum einen blockiert er eine Vernetzungsstelle, zum anderen verhindert er aus sterischen Gründen zu einem nennenswerten Teil auch die Polykondensation des silikatischen Netzwerkes. Daher beschreibt auch keines der Beispiele der DE-A 198 16 136 ein Verfahren, bei dem ein Silan ohne vernetzbaren organischen Rest verwendet wird. Stattdessen wird regelmäßig GLYEO (γ-Glycidyloxypropyltriethoxysilan) eingesetzt. Deshalb ist es auch nicht überraschend, dass solche Systeme nach der Entfernung des bei der Alkoholyse und der Polykondensation frei werdenden Alkohols nicht geliert, d.h. in einem flüssigen Zustand verbleibt. Silane mit mindestens einem vernetzbaren organischen Rest sind allerdings für temperaturstabile Dekors im Herdbereich nicht einsetzbar, da sie thermisch nicht hinreichend stabil sind, was zu erheblichen Emissionen im Betrieb bis hin zur Zerstörung der Dekors führen würde.

Eine einbrennbare Druckpaste zum Bedrucken von Glas bei 500 - 700°C ist aus der DE-C 44 07 366 bekannt. Die Paste enthält eine niedrigschmelzende Glaskomponente, also Schwermetall- und/oder Alkali-/Erdalkalimetalloxide, sowie hochschmelzende Farbpigmente. Die den Schmelzpunkt der Glaskomponente senkenden Oxide sind im Küchenbereich genauso unerwünscht wie die hohe Einbrand-Temperatur in Folge des Verlustes an Festigkeit des Glases.

Eine weitere einbrennbare Druckpaste zum Bedrucken von Glas ist aus der DE-A 195 25 658 bekannt. Auch diese Paste enthält eine niedrigschmelzende Glaskomponente, also Schwermetall- und/oder Alkali-/Erdalkalimetalloxide, sowie anorganische (= hochschmelzende) Farbpigmente. Letztere erfordern Einbrand-Temperaturen von mindestens 500°C.

Die DE-C 100 07 923 beschreibt einen entsprechenden Aufdruck auf der dem Garofen (der Backmuffel) zugewandten Türoberfläche (dies ist die beim Gebrauch des Garofens Stoßeinwirkungen ausgesetzte Oberfläche). Die bekannten Glasflüsse für Borosilikat-Glas sind jedoch stark bleihaltig, und das Blei löst sich bei starkem Erhitzen (im Bereich der während der Pyrolyse auftretenden Temperaturen von deutlich über 400°C) nach und nach aus der Oberfläche der Farbschicht und gelangt in den Backraum. Hierdurch können im Extremfall gesundheitliche Beeinträchtigungen beim Benutzer verursacht werden. Überdies hat eine Farbschicht der bekannten Art eine rauhe Oberfläche mit nur bedingt zufriedenstellender ästhetischer Anmutung.

Eine andere Art, Glasscheiben von Herden zu bedrucken, läßt sich der DE-A 198 14 211 entnehmen. Das beanspruchte Verfahren umfasst die Schritte, ein flüssiges Gemisch mit einem in mindestens einem Lösungsmittel gelösten Farbstoff und einem Härter auf die vorgefertigte Glasscheibe aufzutragen und das Gemisch anschließend unter Verdunstung des mindestens einen Lösungsmittels bei weniger als 200°C zu trocknen und durch chemische Vernetzung zwischen dem Farbstoff und dem Härter zu härten. Es wird ein transparenter Farblack von geringer Dicke erhalten. Die einzelnen Komponenten des flüssigen Gemisches sind chemisch nicht weiter charakterisiert. Dieses Patentdokument erwähnt lediglich eine Spezialglasfarbe der Marabuwerke GmbH & Co. in Tamm (Deutschland). Dabei handelt es sich jedoch um eine Farbe auf organischer Basis, z. B. auf Basis von Epoxidharzen, die bereits bei 140°C höchstens eine halbe Stunde lang belastbar ist.

Die EP-A 0 535 474 schildert ein Verfahren zur Herstellung einer einfach- oder doppeltgekrümmten Verbundglasscheibe, insbesondere für Kraftfahrzeuge. Bei dem beschriebenen Verfahren wird mit "klassischen" Siebdruck-Emails gearbeitet, das heißt, es werden Glasfritten im Siebdruck-Material eingesetzt. Die Silane werden lediglich als Additive verwendet, deren Funktion in der Fixierung der Dekordrucke nach der Trocknung besteht (die Silane haben hier lediglich eine Niedertemperatur-Funktion; sie haben den Vorteil, dass sie bei niederer Temperatur wirken, ohne bei höherer Temperatur thermisch zersetzt zu werden). Das bedeutet, dass die Silane nach der thermischen Verdichtung der Auftragsmasse keine glasartige Matrix ausbilden bzw dass eine sich ausbildende Matrix nicht für einen Ersatz der Glasfritten ausreicht.

Die Erfinder haben sich daher die Aufgabe gestellt, einen Werkstoff, genauer gesagt, eine für den Siebdruck geeignete Paste, mit guter Lagerstabilität bereitzustellen, der bzw. die geeignet ist, um Glas(scheiben), insbesondere vorgespannte(s) Borosilikat-Glas(scheiben), blickdicht zu bedrucken. Aus der Anforderung, für den Siebdruck geeignet zu sein, ergibt sich eine weitere Anforderung an die Paste: sie muß eine ausreichend lange Standzeit im Sieb haben. Das bedruckte Borosilikat-Glas soll eine mechanische Stabilität aufweisen, die ausreichend gut ist, um einen störungsfreien Betrieb im z.B. Garofen zu gewährleisten, weiterhin keine physiologisch bedenklichen Schwermetalle bzw. deren Oxide enthalten und auch während des Betriebes bei Temperaturen von bis zu 400 oder 420°C keine schädlichen Emissionen (z.B. in Form von Zersetzungsprodukten) freisetzen, wohl aber bei diesen Temperaturen thermisch beständig sein. Der Werkstoff sollte sich mit Glas, insbesondere mit Borosilikat-Glas, kombinieren und bei Einbrand-Temperaturen verarbeiten lassen, die die thermische Vorspannung des zu bedruckenden Glases nicht beeinträchtigen. Vorzugsweise liegen diese Temperaturen unterhalb 300°C, genauer bei 200 bis unterhalb 300°C, vorzugsweise bei 250 - 280°C. Solange die Vorspannung nicht beeinträchtigt wird oder die Beeinträchtigung der Vorspannung je nach Verwendung des bedruckten Glases keine negativen Auswirkungen hat, können die Einbrand-Temperaturen auch bei 300°C oder oberhalb 300°C liegen. Die Drucke sollen nach dem Einbrand ausreichende Konturenschärfe und Kratzfestigkeit, eine genügend große optische Dichte (blickdicht) und eine gute Haftung auf dem Glas aufweisen, und dies natürlich auch bei den Betriebstemperaturen von bis zu 420°C.

Die Erfinder haben diese Aufgabe dadurch gelöst, dass sie eine für den Siebdruck geeignete Paste bereit gestellt haben, die frei von Email ist. Dementsprechend betrifft die vorliegende Erfindung nach einem ersten Aspekt eine Paste gemäß Patentanspruch 1. Ein weiterer Aspekt der vorliegenden Erfindung betrifft ein Verfahren für die Herstellung dieser Paste gemäß Patentanspruch 10. Schließlich stellt ein Siebdruck-Verfahren zur Aufbringung von Dekordrucken unter Verwendung dieser Paste einen letzten Gesichtspunkt der vorliegenden Erfindung dar.

Erfindungsgemäß wird "Email" definiert als Glasfritte ohne Pigment (im Gegensatz zur üblichen Definition, wonach Email die Kombination von Glasfritte und Pigment ist). Erfindungsgemäß wird also nur auf Glasfritte, nicht aber auf Pigment verzichtet, was mit dem Begriff "frei von Email" oder "Email-frei" umschrieben sein soll.

Den Erfindern ist es gelungen, Sol-Zusammensetzungen zu entwickeln, die in der Lage sind, die Funktionen ((i) Einstellung einer nach Möglichkeit optimalen Rheologie der Siebdruckpaste; (ii) Erhöhung der Standzeit im Sieb; (iii) Fixierung des Druckes vor dem Schritt des Einbrennens) herkömmlicher Siebdrucköle (insbesondere hochsiedende organische Lösungsmittel) teilweise oder vollständig zu übernehmen. Funktion (iii) wird bei gegebener Sol-Zusammensetzung durch die Polykondensation eines Gemisches aus mindestens einem Silan der allgemeinen Formel RₓSi(OR')₄₋ₓ (wobei R = Alkyl, Aryl, Arylalkyl, Alkylaryl oder H; R' = H, Methyl, Ethyl, n- oder i-Propyl, n-, iso-, sek.- oder tert.-Butyl; x (für das erste Silan) = 0 oder 1; x (für jedes weitere Silan) = 0, 1, 2, 3 oder 4) und mindestens einem Polysiloxan der allgemeinen Formel [R₂SiO]_{y} (genauer R₃Si-(O-SiR₂)_{y}-O-SiR₃; wobei R wiederum Alkyl, Aryl, Arylalkyl, Alkylaryl oder H ist, und y eine ganze Zahl ist, die mindestens 2 ist und nahezu unendlich groß sein kann) gewährleistet. Das mindestens eine Polysiloxan wird auch als silikatische Verdünner-Komponente oder silikatischer Reaktiv-Verdünner bezeichnet. Dieser silikatische Reaktiv-Verdünner (allein, ohne Silan) ist für die Erhöhung der Standzeit im Sieb verantwortlich. Er ist außerdem ein Bestandteil der Bindematrix der Paste und ermöglicht, insbesondere beim Siebdruck-Verfahren, die Schritte der Trocknung und des Einbrennens vorzunehmen, ohne dass größere Mengen an Lösungsmittel frei- oder zersetzt werden, was es ermöglicht, diese beiden Schritte umweltfreundlicher zu gestalten. Der Reaktiv-Verdünner trägt darüber hinaus auf Grund seiner verringerten Oberflächenspannung zu einer guten Benetzung des Glases während des Druckvorganges bei, was zu hoher Konturenschärfe und einer exzellenten Haftung auf der Substrat-Oberfläche führt. Die Kombination der Organosilane mit den silikatischen Reaktiv-Verdünnern gewährleistet schließlich, dass die Eigenschaften des Dekors nach dem Einbrand vergleichbar sind denen, die Dekors auf der Basis von Polymeren aufweisen.

Die Rheologie schließlich (Funktion (i)) wird einerseits beeinflußt durch das Produkt von Hydrolyse und Kondensation des mindestens einen Silans der allgemeinen Formel RₓSi(OR')₄₋ₓ mit dem mindestens einen Polysiloxan der allgemeinen Formel [R₂SiO]_{y} bzw.

R₃Si-(O-SiR₂)_{y}-O-SiR₃. Andererseits tragen aber auch fein dispergierte Nanopartikel, insbesondere SiO₂ und Al₂O₃, die aber kein essentieller Bestandteil der erfindungsgemäßen Siebdruckpaste sind, zu ihrer Rheologie bei (darüber hinaus erlauben die Nanopartikel auf Grund ihrer intermolekularen Wechselwirkungen, größere Schichtdicken zu erzielen, was entscheidend sein kann, was die Eigenschaft der Blickdichte betrifft).

Bevorzugterweise ist x für das erste Silan definiert als 1.

Gemäß einer anderen bevorzugten Ausführungsform der erfindungsgemäßen Paste ist R' entweder H, Methyl oder Ethyl.

Ein wesentlicher Vorteil der Paste der vorliegenden Erfindung ist, dass die mit ihr erhältlichen Dekors bei Temperaturerhöhung keinerlei Crackprodukte freisetzen und auch nicht zerstört werden. Nach thermischer Belastung resultiert vielmehr ein Dekor, das in seinen Eigenschaften denen klassischer Emaildekors vergleichbar ist, zudem aber eine ausgezeichnete Haftung an der Oberfläche des Borofloat-Glases zeigt.

Die erfindungsgemäße Druckpaste, die frei von jeglicher Email (gemäß vorstehender Definition) ist, enthält eine Matrix auf Basis eines Si-Polymers, das erhältlich ist durch Hydrolyse und Kondensation, vorzugsweise initiiert mittels eines Katalysators, von mindestens einem Silan der allgemeinen Formel RₓSi(OR')₄₋ₓ mit mindestens einem Polysiloxan der allgemeinen Formel [R₂SiO]_{y} bzw. R₃Si-(O-SiR₂)_{y}-O-SiR₃, wobei
- die Reste R unabhängig voneinander Alkyl, Aryl, Arylalkyl, Alkylaryl oder H sein können;
- die Reste R' unabhängig voneinander H, Methyl, Ethyl, n- oder i-Propyl, n-, Iso-, sek.- oder tert.-Butyl sein können;
- x = 0 oder 1 (für das erste Silan);
- x = 0, 1, 2, 3 oder 4 (für jedes weiter Silan); und
- y = eine ganze Zahl, die mindestens 2 ist und nahezu unendlich groß sein kann.

Während der Kondensation werden Alkohole bzw. Wasser gebildet, die zum großen Teil im Laufe der Herstellung der Paste wieder entfernt und durch ein hochsiedendes Lösungsmittel ersetzt werden. Die erfindungsgemäße Druckpaste umfasst daher wenigstens ein hochsiedendes organisches Lösungsmittel. Erfindungsgemäß ist ein hochsiedendes organisches Lösungsmittel definiert als ein Lösungsmittel mit einem Siedepunkt von 100°C oder darüber. Bevorzugte hochsiedende organische Lösungsmittel sind α-Pinen, n-Butylacetat, 2-Butanol, Isopropoxy-ethanol, Butylglykol und Terpineol.

Der Begriff "hochsiedendes organisches Lösungsmittel" umfasst jedoch weder Wasser (anorganisch) noch Alkohole mit einem Siedepunkt von unter 100°C wie Methanol oder Ethanol in nennenswerten Mengen (Spuren der Nebenprodukte der Kondensation = Wasser bzw. Alkohole mit einem Siedepunkt von unter 100°C werden in der Paste zwar vorliegen, sie lassen sich in diesen geringen Mengen jedoch nicht als Lösungsmittel bezeichnen und sind, bezogen auf die Gesamtmasse der fertigen Druckpaste, mit insgesamt weniger als 5%, vorzugsweise mit weniger als 3%, enthalten.

Ein weiterer Bestandteil der Druckpaste der vorliegenden Erfindung ist ein Farbkörper. Für die Farbgebung werden übliche temperaturbeständige anorganische, vorzugsweise ungiftige bzw. keine giftigen Emissionen verursachenden Pigmente verwendet, wie sie auch in Emailfarben zum Einsatz kommen. Besonders bevorzugte Pigmente im Sinn der Erfindung sind Graphit, TiO₂ oder ein Gemisch dieser beiden. Ein weiterer Vorteil der Erfindung besteht darin, dass auch Graphit als Pigment einsetzbar ist. In vielen Emailpasten ist dies nicht möglich, da Graphit während des Einbrandes oxidativ angegriffen wird.

Die erfindungsgemäße Paste kann außerdem dispergierte Nanopartikel, vorzugsweise in Form der Oxide von Si und Al, umfassen. Die Paste kann weiterhin Additive, speziell Verdicker oder Thixotropiermittel umfassen.

Im Nachfolgenden soll das Verfahren zur Herstellung der erfindungsgemäßen Druckpaste beschrieben werden. Dieses Verfahren umfasst die Schritte,
(a) mindestens ein Silan der allgemeinen Formel RₓSi(OR')₄₋ₓ per Hydrolyse und Kondensation mit mindestens einem Polysiloxan der allgemeinen Formel [R₂SiO]_{y} bzw. R₃Si-(O-SiR₂)_{y}-O-SiR₃ umzusetzen, wobei R, R', x und y wie in Anspruch 1 definiert sind;
(b) dem Gemisch in bzw. aus Schritt (a) mindestens einen Farbkörper zuzusetzen (das heißt, Hydrolyse und Kondensation können in Gegenwart des Farbkörpers ablaufen, der Farbkörper kann aber auch erst danach zugesetzt werden);
(c) dem Gemisch aus Schritt (a) bzw. (b) ein hochsiedendes organisches Lösungsmittel mit einem Siedepunkt von mindestens 100°C zuzusetzen; und
(d) das/den bei der Hydrolyse und Kondensation in (a) gebildete/n Wasser/Alkohol aus dem in Schritt (c) erhaltenen Gemisch zu entfernen.

Gemäß einer bevorzugten Ausführungsform handelt es sich bei dem mindestens einen Silan um Methyltriethoxysilan und Tetraethoxysilan, insbesondere im Verhältnis 3-4:1, speziell 3,4:1 (sofern nicht anders angegeben beziehen sich die in dieser Beschreibung und in den Ansprüchen genannten Mengen-/Konzentrationsangaben auf die Masse).

Gemäß einer anderen bevorzugten Ausführungsform finden die Hydrolyse und Kondensation in Schritt (a) in Gegenwart eines Verdickers bzw. Thixotropierungsmittels statt. Alternativ wird der Verdicker bzw. das Thixotropierungsmittel erst nach der Hydrolyse und Kondensation von Schritt (a) zugesetzt. Vorzugsweise handelt es sich bei dem Verdicker bzw. Thixotropierungsmittel zur Steuerung der Rheologie um einen PVA, ein PEG oder ein Cellulose-Derivat wie Methyl- oder Ethylcellulose.

Gemäß einer dritten bevorzugten Ausführungsform finden die Hydrolyse und Kondensation in Schritt (a) in Gegenwart eines Katalysators statt, der insbesondere eine verdünnte Mineralsäure ist, insbesondere Schwefelsäure, speziell 37,5%ige Schwefelsäure, die üblicherweise unter dem Begriff Akkusäure im Handel erhältlich ist. Die fertige Paste enthält daher vorzugsweise geringe Mengen (bis zu 3%) dieses Katalysators.

Gemäß einer vierten bevorzugten Ausführungsform finden die Hydrolyse und Kondensation in Schritt (a) in Gegenwart eines feindispersen Füllstoffs statt. Alternativ wird der feindisperse Füllstoff erst nach der Hydrolyse und Kondensation von Schritt (a) zugesetzt Vorzugsweise handelt es sich bei dem feindispersen Füllstoff um nanoskaliges SiO₂ oder Al₂O₃, insbesondere um ein Kieselsol wie Levasil® 50/50.

Gemäß einer fünften bevorzugten Ausführungsform erfolgt das Entfernen des in Schritt (a) gebildete/n Wassers/Alkohols destillativ oder durch Ausfällen der in Schritt (a) gebildeten Bindemittelphase.

Gemäß einer sechsten bevorzugten Ausführungsform erfolgt Schritt (c) vor Schritt (d).

Gemäß einer siebten bevorzugten Ausführungsform liegen die einzelnen Komponenten, bezogen auf die Gesamtmasse der fertigen Paste, in folgenden Verhältnissen vor: Silan 30 bis 84%, vorzugsweise 40 bis 65%; Polysiloxan 0,1 bis 40%, vorzugsweise 2,5 bis 15%; Farbkörper 5 bis 40%, vorzugsweise 7 bis 12%; hochsiedendes Lösungsmittel 10 bis 50%, vorzugsweise 30 bis 45%; feindisperser Füllstoff (= dispergierte Nanopartikel) 0 bis 20%, vorzugsweise 5 bis 10%; Bindemittel(Verdicker)/Thixotropierungsmittel 0 bis 10%, vorzugsweise 2 bis 7%, und Katalysator für die Kondensation 0 bis 3%, vorzugsweise 0,5 bis 2%.

Aus den vorstehend auf das Verfahren zur Herstellung der Paste bezogenen Masse-Angaben der einzelnen Komponenten ergeben sich konsequenterweise bevorzugte Ausführungsformen auch der Druckpaste.

### Eigenschaften/Verarbeitung der Paste

Überraschenderweise wurde festgestellt, daß die Matrix (auf Basis eines Si-Polymers) der Paste gemäß vorliegender Erfindung bereits bei Einbrand-Temperaturen von weniger als 300°C soweit hergestellt ("ausgebrannt") ist, daß beim Anwender im Betrieb bei Temperaturen bis 420°C keine weiteren schädlichen Zersetzungsprodukte mehr entstehen. Die relativ niedrige Einbrand-Temperatur verhindert das thermische Entspannen des Glases. Es können aber auch höhere Einbrand-Temperaturen eingestellt werden, solange sie die thermische Vorspannung des zu bedruckenden Glases nicht beeinträchtigen bzw. eine beeinträchtigte Vorspannung je nach Verwendung des bedruckten Glases keine negativen Auswirkungen hat. Die Druckpaste schmilzt beim Einbrand nicht auf - reines SiO₂ erweicht erst oberhalb 1100°C -, sondern verdichtet über chemische Reaktionen.

Die Bedruckung der Garraumtür mit der Paste gemäß der Erfindung wird - in an sich bekannter Weise - bevorzugt mittels eines Siebdruck-Verfahrens entsprechend den ergonomischen bzw. gestalterischen Vorgaben ausgeführt, wobei beispielsweise ein 77T oder 100T Siebdruckgewebe eingesetzt werden kann. Bevorzugterweise wird die mit der Bedruckung versehene Oberfläche des Glases vor dem Druck mit einem organischen Lösungsmittel (insbesondere mit Aceton oder einem niederen Alkohol wie Methanol, Ethanol oder i-Propanol) gereinigt. Gegebenenfalls wird der Paste in Mengen von maximal 0,2% (bezogen auf die Masse der Paste) ein die Haftung auf der Glasoberfläche noch weiter verbesserndes Mittel wie ein Polysiloxan, ein Polyethersiloxan-Copolymeres oder ein Ti-Alkoholat zugegeben.

Erfindungsgemäß wird bei dem Siebdruck-Verfahren zur Aufbringung von Dekordrucken auf thermisch zu belastendes Glas die Paste nach einem der Ansprüche 1 bis 9 auf das Glas, insbesondere Borosilikat-Glas, aufgetragen und zusammen mit dem Glas einem thermischen Einbrand bei einer Temperatur von vorzugsweise unterhalb 300°C unterworfen. Besonders bevorzugte Einbrand-Temperaturen zur Verdichtung des Dekors liegen bei 250 - 280°C.

Nach einer bevorzugten Ausführungsform des erfindungsgemäßen Siebdruck-Verfahrens geht dem Schritt des Einbrands ein Trocknungsschritt bei 150 bis 180°C, vorzugsweise bei etwa 170°C, voraus. Durch dieses Vortrocknen lassen sich nicht nur zumindest zum Teil die Substanzen aus dem Dekors entfernen (dies ist vor allem das hochsiedende organische Lösungsmittel sowie ggf. der Verdicker bzw. das Thixotropierungsmittel), die beim Gebrauch des Garofens für gesundscheitsschädliche Emissionen verantwortlich wären. Durch den Trocknungsvorgang lassen sich die Gläser vielmehr auch schon vor dem Einbrand gut handhaben und lagern, da die Paste getrocknet ist und besser auf dem Glas haftet.

### Beispiele

### Beispiel 1: Herstellung der erfindungsgemäßen Druckpaste

Das Basismaterial der Siebdruckpaste wurde aus Methyltriethoxysilan und Tetraethoxysilan im Verhältnis 3,4:1 hergestellt (zusammen 81%). Diesem Gemisch wurden 18% eines Kieselsols (z.B. Levasil® 50/50) zugesetzt. Die Hydrolyse und Kondensation wurden durch den Zusatz von 1% 37,5%iger Schwefelsäure initiiert. Bezogen auf dieses Gemisch (bestehend aus Silan, Kieselsol und Schwefelsäure; insgesamt 100%) wurden 6% Diethoxy-Polydimethylsiloxan als ein Polysiloxan zugegeben. Der bei der Hydrolyse und Kondensation frei werdende Alkohol wurde destillativ aus dem Reaktionsgemisch entfernt und gegen Butylacetat ausgetauscht. Die zugegebene Masse an Butylacetat war 50%, bezogen wiederum auf die Masse von 100% aus Silan, Kieselsol und Säure.

Man erhielt eine niedrigviskose, milchige Flüssigkeit, die zur Herstellung einer Siebdruckpaste mit Ethylcellulose (4%, bezogen auf die Gesamtpaste = 100%) und mit einem zweiten Aliquot eines hochsiedenden Lösungsmittels (diesmal Terpineol, 18%, ebenfalls bezogen auf die Gesamtpaste = 100%) versetzt wurde. Die Pigmentierung erfolgte über den Zusatz von Graphit (8%, ebenfalls bezogen auf die Gesamtpaste = 100%).

### Beispiel 2: Verwendung der in Beispiel 1 hergestellten Druckpaste für den Siebdruck

Die Siebdruckpaste aus Beispiel 1 wurde an einem herkömmlichen Siebdruckstock unter Verwendung eines Polyestergewebes (z.B. 325 mesh) und einer Silikonrakel zu Dekors auf Borosilikat-Glas verarbeitet. Nach einer kurzen Vortrocknung bei 170°C, die der Entfernung der Siebdruck-Additive (Lösungsmittel und Ethylcellulose) aus dem Dekor diente, wurde das Dekor über einen Zeitraum von 10 min bei 270°C verdichtet. Man erhielt ein dunkelgrau gefärbtes, sehr gut haftendes und weitestgehend emissionsfreies Dekor, dass bei Temperaturen von bis zu 650°C bei gleichbleibend guter Haftung am Substrat stabil war.

## Patentansprüche

1. Email-freie Paste mit einer Matrix auf Basis eines Si-Polymers, das erhältlich ist durch Hydrolyse und Kondensation von mindestens einem Silan der allgemeinen Formel RₓSi(OR')₄₋ₓ mit mindestens einem Polysiloxan der allgemeinen Formel [R₂SiO]_{y} bzw. R₃Si-(O-SiR₂)_{y}-O-SiR₃, wobei
- die Reste R unabhängig voneinander Alkyl, Aryl, Arylalkyl Alkylaryl oder H sein können;
- die Reste R' unabhängig voneinander H, Methyl, Ethyl, n- oder i-Propyl, n-, iso-, sek.- oder tert.-Butyl sein können;
- x = 0 oder 1 (für das erste Silan);
- x = 0, 1, 2, 3 oder 4 (für jedes weitere Silan); und
- y = eine ganze Zahl, die mindestens 2 ist und nahezu unendlich groß sein kann;
wobei die Paste zusätzlich ein hochsiedendes organisches Lösungsmittel mit einem Siedepunkt von 100°C oder darüber und einen Farbkörper, als Lösungsmittel jedoch keinen Alkohol mit einem Siedepunkt von unter 100°C umfasst.

2. Die Paste nach Anspruch 1, wobei x für das erste Silan 1 ist.

3. Die Paste nach Anspruch 1 oder 2, wobei der Gesamtgehalt der Paste an Wasser und Alkoholen mit einem Siedepunkt von unter 100°C, bezogen auf die Gesamtmasse der Paste, weniger als 5% beträgt.

4. Die Paste nach einem der vorhergehenden Ansprüche, wobei der Farbkörper temperaturbeständige anorganische Pigmente sind.

5. Die Paste nach einem der vorhergehenden Ansprüche, wobei die temperaturbeständigen anorganischen Pigmente Graphit oder TiO₂ sind.

6. Die Paste nach einem der vorhergehenden Ansprüche, wobei die Paste außerdem dispergierte Nanopartikel, vorzugsweise in Form der Oxide von Si und Al, und/oder einen Katalysator, der die Hydrolyse und Kondensation von Silan(en) und Polysiloxan(en) initiiert hat, umfasst.

7. Die Paste nach einem der vorhergehenden Ansprüche, wobei die Paste zusätzlich einen Verdicker bzw. ein Thixotropiermittel umfasst.

8. Die Paste nach einem der vorhergehenden Ansprüche, wobei R' H, Methyl oder Ethyl ist.

9. Die Paste nach einem der vorhergehenden Ansprüche, wobei das mindestens eine Silan Methyltriethoxysilan und Tetraethoxysilan sind.

10. Verfahren zur Herstellung der Paste nach einem der vorhergehenden Ansprüche, wobei das Verfahren die Schritte umfasst,
(a) mindestens ein Silan der allgemeinen Formel RₓSi(OR')₄₋ₓ per Hydrolyse und Kondensation mit mindestens einem Polysiloxan der allgemeinen Formel [R₂SiO]_{y} bzw. R₃Si-(O-SiR₂)_{y}-O-SiR₃ umzusetzen, wobei R, R', x und y wie in Anspruch 1 definiert sind;
(b) dem Gemisch in bzw. aus Schritt (a) mindestens einen Farbkörper zuzusetzen;
(c) dem Gemisch aus Schritt (a) bzw. (b) ein hochsiedendes organisches Lösungsmittel mit einem Siedepunkt von mindestens 100°C zuzusetzen; und
(d) das/den bei der Hydrolyse und Kondensation in (a) gebildete/n Wasser/Alkohol aus dem in Schritt (c) erhaltenen Gemisch zu entfernen.

11. Das Verfahren nach Anspruch 10, wobei Hydrolyse und Kondensation in Schritt (a) in Gegenwart eines Verdickers bzw. Thixotropierungsmittels erfolgen.

12. Das Verfahren nach Anspruch 10, wobei der Verdicker bzw. das Thixotropierungsmittel nach der Hydrolyse und Kondensation von Schritt (a) zugesetzt werden.

13. Das Verfahren nach einem der Ansprüche 10 bis 12, wobei Hydrolyse und Kondensation in Schritt (a) in Gegenwart eines Katalysators erfolgen.

14. Das Verfahren nach einem der Ansprüche 10 bis 13, wobei Hydrolyse und Kondensation in Schritt (a) in Gegenwart eines feindispersen Füllstoffs erfolgen.

15. Das Verfahren nach einem der Ansprüche 10 bis 13, wobei der feindisperse Füllstoff nach der Hydrolyse und Kondensation von Schritt (a) zugesetzt werden.

16. Das Verfahren nach einem der Ansprüche 10 bis 15, wobei das Entfernen des in Schritt (a) gebildete/n Wassers/Alkohols destillativ oder durch Ausfällen der in Schritt (a) gebildeten Bindemittelphase erfolgt.

17. Das Verfahren nach einem der Ansprüche 10 bis 16, wobei Schritt (c) vor Schritt (d) erfolgt.

18. Siebdruck-Verfahren zur Aufbringung von Dekordrucken auf thermisch zu belastendes Glas, **dadurch gekennzeichnet, dass** die Paste nach einem der Ansprüche 1 bis 9 auf das zu dekorierende Glas aufgetragen und zusammen mit dem Glas einem thermischen Einbrand unterworfen wird.

19. Das Verfahren nach Anspruch 18, wobei der Einbrand bei 250 - 280°C erfolgt.

20. Das Verfahren nach Anspruch 18 oder 19, wobei dem Einbrand ein Trocknungsschritt bei 150 bis 180°C vorausgeht, um das hochsiedende organische Lösungsmittel sowie ggf. den Verdicker bzw. das Thixotropierungsmittel zu entfernen.

## Claims

1. Enamel-free paste with a matrix on the basis of an Si polymer, which is obtainable by hydrolysis and condensation from at least one silane of the general formula RₓSi-(OR')₄₋ₓ with at least one polysiloxane of the general formula [R₂SiO]_{y} or R₃Si-(O-SiR₂)_{y}-O-SiR₃, wherein
- the group R can be, independently of one another, alkyl, aryl, arylalkyl, alkylaryl or H;
- the group R' can be, independently of one another, H, methyl, ethyl, n-propyl, i-propyl, n-butyl, iso-butyl, secondary-butyl or tertiary-butyl;
- x = 0 or 1 (for the first silane);
- x = 0, 1, 2, 3 or 4 (for each further silane); and
- y = an integral number, which is at least 2 and can be almost of infinite size; wherein the paste additionally comprises a high-boiling organic solvent with a boiling point of 100° C or thereabove and a colorant, but as solvent does not comprise alcohol with a boiling point of below 100° C.

2. The paste according to claim 1, wherein x is 1 for the first silane.

3. The paste according to claim 1 or 2, wherein the total content of the paste of water and alcohol with a boiling point below 100° C is less than 5% referred to the total mass of the paste.

4. The paste according to one of the preceding claims, wherein the colorants are temperature-resistant inorganic pigments.

5. The paste according to one of the preceding claims, wherein the temperature-resistant inorganic pigments are graphite or TiO₂.

6. The paste according to one of the preceding claims, wherein the paste additionally comprises dispersed nanoparticles, preferably in the form of the oxides of Si and Al, and/or a catalyser, which has initiated the hydrolysis and condensation of silane or silanes and polysiloxane or polysiloxanes.

7. The paste according to one of the preceding claims, wherein the paste additionally comprises a thickener or a thixotropic agent.

8. The paste according to one of the preceding claims, wherein R' is H, methyl or ethyl.

9. The paste according to one of the preceding claims, wherein the at least one silane is methyltriethoxysilane and tetraethoxysilane.

10. Method of producing the paste according to one of the preceding claims, wherein the method comprises the steps:
(a) converting at least one silane of the general formula RₓSi-(OR')₄₋ₓ by hydrolysis and condensation with at least one polysiloxane of the general formula [R₂SiO]_{y} or R₃Si-(O-SiR₂)_{y}-O-SiR₃, wherein R, R', x and y are defined as in claim 1;
(b) adding at least one colorant to the mixture in or from step (a);
(c) adding a high-boiling organic solvent with a boiling point of at least 100° C to the mixture from step (a) or (b); and
(d) removing the water/alcohol, which is formed by hydrolysis and condensation in (a), from the mixture obtained in step (c).

11. The method according to claim 10, wherein hydrolysis and condensation in step (a) are carried out in the presence of a thickener or thixotropic agent.

12. The method according to claim 10, wherein the thickener or the thixotropic agent is added after the hydrolysis and condensation of step (a).

13. The method according to one of claims 10 to 12, wherein hydrolysis and condensation in step (a) are carried out in the presence of a catalyser.

14. The method according to one of claims 10 to 13, wherein hydrolysis and condensation are carried out in step (a) in the presence of a finely dispersed filler.

15. The method according to one of claims 10 to 13, wherein the finely dispersed filler is added after the hydrolysis and condensation of step (a).

16. The method according to one of claims 10 to 15, wherein the removal of the water/alcohol formed in step (a) is carried out by distillation or by precipitation of the binder phase formed in step (a).

17. The method according to one of claims 10 to 16, wherein step (c) is carried out before step (d).

18. Screen printing method for application of decorative prints to thermally loadable glass, **characterised in that** the paste according to one of claims 1 to 9 is applied to the glass to be decorated and is subjected together with the glass to a thermal fusion.

19. The method according to claim 18, wherein the fusion takes place at 250 to 280° C.

20. The method according to claim 18 or 19, wherein the fusion proceeds from a drying step at 150 to 180° C in order to remove the high-boiling organic solvent as well as optionally the thickener or the thixotropic agent.

## Revendications

1. Pâte sans émail comprenant une matrice à base d'un polymère Si, qui est obtenu par l'hydrolyse et la condensation d'au moins un silane de formule générale RₓSᵢ(OR')₄₋ₓ avec au moins un polysiloxane de formule générale [R₂SiO]_{y} ou R₃Si-(O-SiR₂)_{y}-O-SiR₃,
- les restes R pouvant être indépendamment les uns des autres de l'alkyle, de l'aryle, de l'arylalkyle, de l'alkylaryle ou du H ;
- les restes R' pouvant être indépendamment les uns des autres du H, du méthyle, de l'éthyle, du n-propyle ou du i-propyle, du n-butyle, du iso-butyle ou du butyle secondaire ou tertiaire ;
- x étant 0 ou 1 (pour le premier silane) ;
- x étant 0, 1, 2, 3 ou 4 (pour chaque autre silane) ; et
- y étant un nombre entier qui est au moins 2 et peut être pratiquement infini,
la pâte comprenant en supplément un solvant organique à haut point d'ébullition avec un point d'ébullition de 100°C ou plus et un pigment, mais ne comprend pas comme solvant un alcool avec un point d'ébullition inférieur à 100°C.

2. La pâte selon la revendication 1, x représentant le premier silane 1.

3. La pâte selon la revendication 1 ou 2, la teneur globale de la pâte en eau et en alcools avec un point d'ébullition inférieur à 100°C, par rapport à la masse globale de la pâte, étant inférieure à 5 %.

4. La pâte selon l'une quelconque des revendications précédentes, la matière colorante étant des pigments inorganiques résistants à la température.

5. La pâte selon l'une quelconque des revendications précédentes, les pigments inorganiques résistants à la chaleur étant du graphite ou du TiO₂.

6. La pâte selon l'une quelconque des revendications précédentes, la pâte comprenant également des nanoparticules dispersées, de préférence sous la forme d'oxydes de Si et Al, et/ou un catalyseur, qui a amorcé l'hydrolyse et la condensation de silane(s) et de polysiloxane(s).

7. La pâte selon l'une quelconque des revendications précédentes, la pâte comprenant en supplément un épaississant ou un agent thixotrope.

8. La pâte selon l'une quelconque des revendications précédentes, R' étant du H, du méthyle ou de l'éthyle.

9. La pâte selon l'une quelconque des revendications précédentes, le au moins un silane étant du méthyltriéthoxysilane et du tétraéthoxysilane.

10. Procédé pour la fabrication de la pâte selon l'une quelconque des revendications précédentes, le procédé comprenant les étapes suivantes
(a) convertir au moins un silane de formule générale RₓSᵢ(OR')₄₋ₓ par hydrolyse et condensation avec au moins un polysiloxane de formule générale [R₂SiO]_{y} ou R₃Si-(O-SiR₂)_{y}-O-SiR₃, R, R', x et y étant définis comme dans la revendication 1 ;
(b) ajouter au mélange à l'étape (a) ou à partir de l'étape (a) au moins une matière colorante :
(c) ajouter au mélange à partir de l'étape (a) ou (b) un solvant organique à haut point d'ébullition avec un point d'ébullition d'au moins 100°C ; et
(d) enlever l'eau ou l'alcool formé lors de l'hydrolyse ou de la condensation à l'étape (a) du mélange obtenu à l'étape (c).

11. Le procédé selon la revendication 10, l'hydrolyse et la condensation s'effectuant à l'étape (a) en présence d'un épaississant ou d'un agent thixotrope.

12. Le procédé selon la revendication 10, l'épaississant ou l'agent thixotrope étant ajouté après l'hydrolyse et la condensation de l'étape (a).

13. Le procédé selon l'une quelconque des revendications 10 à 12, l'hydrolyse et la condensation s'effectuant à l'étape (a) en présence d'un catalyseur.

14. Le procédé selon l'une quelconque des revendications 10 à 13, l'hydrolyse et la condensation s'effectuant à l'étape (a) en présence d'une matière de charge finement dispersée.

15. Le procédé selon l'une quelconque des revendications 10 à 13, la matière de charge finement dispersée étant ajoutée après l'hydrolyse et la condensation de l'étape (a).

16. Le procédé selon l'une quelconque des revendications 10 à 15, l'enlèvement de l'eau/l'alcool formée à l'étape (a) s'effectuant par distillation ou par précipitation de la phase de liant formé à l'étape (a).

17. Le procédé selon l'une quelconque des revendications 10 à 16, l'étape (c) intervenant avant l'étape (d).

18. Procédé de sérigraphie pour l'application d'impressions de décor sur du verre à solliciter thermiquement, **caractérisé en ce que** la pâte selon l'une quelconque des revendications 1 à 9 est appliquée sur le verre à décorer et est soumise conjointement avec le verre à une cuisson thermique.

19. Le procédé selon la revendication 18, la cuisson s'effectuant à 250-280°C.

20. Procédé selon la revendication 18 ou 19, une étape de séchage à 150 jusqu'à 180°C précédant la cuisson, afin d'enlever le solvant organique à haut point d'ébullition et éventuellement l'épaississant ou l'agent thixotrope.
